# EUROPEAN PATENT SPECIFICATION

(11) **EP 3 103 765 B1**
(45) Date of publication and mention of the grant of the patent: **03.04.2019**
(21) Application number: 15747018.8
(22) Date of filing: 04.02.2015
(51) Int. Cl.: C01B 3/38, H01M 8/0612

(54) **HYDROGEN GENERATION DEVICE AND OPERATION METHOD FOR HYDROGEN GENERATION DEVICE**
WASSERSTOFFERZEUGUNGSVORRICHTUNG UND BETRIEBSVERFAHREN FÜR DIE WASSERSTOFFERZEUGUNGSVORRICHTUNG
DISPOSITIF DE PRODUCTION D'HYDROGÈNE ET PROCÉDÉ DE FONCTIONNEMENT POUR LE DISPOSITIF DE PRODUCTION D'HYDROGÈNE

(30) Priority: 05.02.2014 JP 2014020030; 25.02.2014 JP 2014033761
(43) Date of publication of application: 14.12.2016
(73) Proprietor: Panasonic Intellectual Property Management Co., Ltd., Osaka-shi, Osaka 570-6207 (JP)
(72) Inventor: TAKEUCHI, Tomoya, Osaka-shi Osaka 540-6207 (JP); YOSHIDA, Yutaka, Osaka-shi Osaka 540-6207 (JP); MUKAI, Yuji, Osaka-shi Osaka 540-6207 (JP)
(74) Representative: Grünecker Patent- und Rechtsanwälte PartG mbB
(86) International application number: PCT/JP2015/000486
(87) International publication number: WO 2015/118860

(56) References cited:
- WO-A1-2010/109863
- WO-A1-2014/147991
- WO-A1-2014/147991
- JP-A- H10 214 632
- JP-A- 2003 197 246
- JP-A- 2003 277 007
- JP-A- 2005 209 459
- JP-A- 2007 070 130
- JP-A- 2010 235 376
- JP-A- 2012 116 666
- JP-A- 2014 107 187
- JP-A- 2014 189 410
- JP-A- 2015 022 863
- US-A1- 2009 004 516

## Description

### TECHNICAL FIELD

The present invention relates to a hydrogen generating apparatus that generates hydrogen by reacting a hydrocarbon feed stock with water. More specifically, the present invention relates to a hydrogen generating apparatus equipped with a hydro-desulfurizer for removing a sulfur compound which is contained in a feed stock and harmful to the hydrogen generating apparatus, by hydrogenation reaction, and a method for operating the same.

### BACKGROUND ART

A fuel cell system is usually equipped with a hydrogen generating apparatus because a hydrogen gas used as a fuel for power generation is not ready as a common infrastructure. In a hydrogen generating apparatus, steam reforming reaction is generally used.

The steam reforming reaction generates a hydrogen-containing gas containing hydrogen as the main ingredient by reacting city gas which is a feed stock with water vapor by using a Ni or Ru reforming catalyst at a high temperature ranging from about 600°C to 700°C. As a method for obtaining thermal energy required for the steam reforming reaction, a method of combusting a fuel offgas from a fuel cell with a combustor is commonly conducted.

The feed stock fed to the hydrogen generating apparatus contains a sulfur compound. Concretely, city gas containing methane as the main ingredient and LP gas contain sulfur compounds such as sulfides or mercaptans added as an odorant for detecting leakage, in addition to sulfur components derived from the feed stock. Sulfur contained in these sulfur compounds, even at very low concentration, is known to advance deterioration in activity of Ni and Ru reforming catalysts that are often used in the steam reforming reaction.

Therefore, for a feed stock like city gas and LP gas, an appropriate desulfurization treatment is conducted before the feed stock is fed to a hydrogen generating apparatus. As a desulfurization treatment method, the following two methods are currently employed: an adsorbent desulfurizing method and a hydrodesulfurization method.

The adsorbent desulfurizing method removes sulfur compounds by passing a feed stock through a desulfurizer filled with an adsorbent capable of adsorbing sulfur compounds at normal temperature, and has a merit of very simple handling. However, its small adsorption capacity raises the frequency of replacement of the desulfurizer when the sulfur compound concentration in the feed stock is high, leading to the problem of increase in the total cost.

On the other hand, the hydrodesulfurization method converts a sulfur compound to hydrogen sulfide that is easy to be adsorbed, by adding hydrogen to a feed stock to cause hydrogenation reaction, and removes the generated hydrogen sulfide by adsorption to an adsorbent, and hence has a merit of large adsorption capacity. However, the hydrodesulfurization method has a problem that the desulfurizer must be kept at appropriate temperatures ranging from about 200°C which is the lowest temperature to about 300°C which is the highest temperature or less to allow hydrogenation reaction and adsorption.

To be more specific, when the temperature of the hydro-desulfurizer is lower than the lowest temperature, the adsorption capacity significantly decreases, and conversely, when the temperature is higher than the highest temperature, the hydro-desulfurizing agent is thermally degraded, and loses the desulfurizing ability.

In light of this, there is a proposal of providing a heat exchanger for cooling inside or on the surface of a hydro-desulfurizer, and circulating air which is a cooling medium in the heat exchanger for cooling, thereby cooling the hydro-desulfurizer so that the hydro-desulfurizer is kept at an appropriate temperature (see, for example, PTL 1).

However, in the hydrogen generating apparatus disclosed in PTL 1, pressure fluctuation occurs in the combustion space and the combustion air channel because the combustion condition is unstable directly after ignition of the combustor. At this time, since controllability of the combustion air flow rate is impaired, excess and deficiency of combustion air feed, or oscillation of combustion flame (oscillated combustion) occurs, which can lead to the problem of increase in concentration of carbon monoxide in the exhaust gas or extinguishment.

### Citation List

### Patent Literature

PTL 1: JP H10 214632 A

### SUMMARY OF THE INVENTION

The present invention has been made in consideration of the aforementioned problems, and provides a hydrogen generating apparatus capable of checking unstable combustion in a combustor, and a method for operating the same.

A hydrogen generating apparatus of the present invention is defined in claim 1.

With such a configuration, it is possible to check unstable combustion in the combustor, and to operate the hydrogen generating apparatus stably.

A method for operating a hydrogen generating apparatus of the present invention is defined in claim 14.

With such a method, it is possible to check unstable combustion in the combustor, and to operate the hydrogen generating apparatus stably. Further advantageous embodiments are defined in the dependent claims.

### BRIEF DESCRIPTION OF DRAWINGS

FIG. 1 is a block diagram schematically showing one example of a general configuration of a hydrogen generating apparatus according to the first exemplary embodiment of the present invention.
FIG. 2 is a flow chart showing one example of a method for operating the hydrogen generating apparatus according to a first exemplary embodiment of the present invention.
FIG. 3 is a flow chart showing one example of a method for operating a hydrogen generating apparatus according to a second exemplary embodiment of the present invention.
FIG. 4 is a flow chart showing one example of a method for operating a hydrogen generating apparatus according to a third exemplary embodiment of the present invention.
FIG. 5 is a flow chart showing one example of a method for operating a hydrogen generating apparatus according to a fourth exemplary embodiment of the present invention.
FIG. 6 is a block diagram schematically showing one example of a general configuration of a hydrogen generating apparatus according to a fifth exemplary embodiment of the present invention.
FIG. 7 is a flow chart showing one example of a method for operating the hydrogen generating apparatus according to the fifth exemplary embodiment of the present invention.
FIG. 8 is a flow chart showing one example of a method for operating a hydrogen generating apparatus according to a sixth exemplary embodiment of the present invention.
FIG. 9 is a flow chart showing one example of a method for operating a hydrogen generating apparatus according to a seventh exemplary embodiment of the present invention.
FIG. 10 is a block diagram schematically showing one example of a general configuration of a hydrogen generating apparatus according to an eighth exemplary embodiment of the present invention.
FIG. 11 is a flow chart showing one example of a method for operating the hydrogen generating apparatus according to the eighth exemplary embodiment of the present invention.
FIG. 12 is a flow chart showing one example of a method for operating a hydrogen generating apparatus according to a ninth exemplary embodiment of the present invention.
FIG. 13 is a flow chart showing one example of a method for operating a hydrogen generating apparatus according to a tenth exemplary embodiment of the present invention.
FIG. 14 is a flow chart showing one example of a method for operating a hydrogen generating apparatus according to an eleventh exemplary embodiment of the present invention.
FIG. 15 is a schematic view showing one example of a general configuration of fuel cell system 121 according to a twelfth exemplary embodiment of the present invention.

### DESCRIPTION OF EMBODIMENTS

Hereinafter, each exemplary embodiment of the hydrogen generating apparatus according to the present invention will be described with reference to the drawings. Numerical values, shapes, materials, constituents, disposed positions and connecting forms of constituents, steps, sequences of steps and so on shown in each exemplary embodiment are merely examples.

Among the constituents in the following exemplary embodiments, a constituent that is not described in an independent claim showing the highest concept of the present invention is described as an optional constituent constituting a more desirable form. For the constituent denoted by the same reference mark in different drawings, overlapping description is sometimes omitted.

### (First exemplary embodiment)

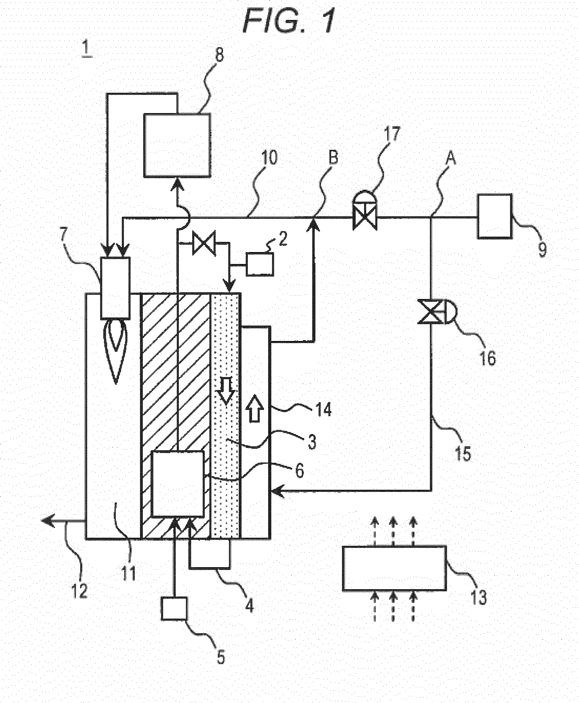

FIG. 1 is a block diagram schematically showing one example of a general configuration of hydrogen generating apparatus 1 according to the first exemplary embodiment of the present invention.

As illustrated in FIG. 1, hydrogen generating apparatus 1 according to the first exemplary embodiment of the present invention includes reformer 6, combustor 7, air feeder 9, combustion air channel 10, hydro-desulfurizer 3, cooler 14, channel resistance part 17, cooling channel 15, first valve 16, and controller 13.

Reformer 6 reforms a feed stock containing hydrocarbon to generate a hydrogen-containing gas. Combustor 7 combusts a combustion gas which is a feed stock or a hydrogen-containing gas, and air to heat reformer 6. Air feeder 9 feeds air to combustor 7. Combustion air channel 10 connects combustor 7 and air feeder 9. Hydro-desulfurizer 3 removes a sulfur component in a feed stock by hydrogenation reaction. Cooler 14 cools hydro-desulfurizer 3 by circulating air. Channel resistance part 17 is disposed in combustion air channel 10. Cooling channel 15 branches from combustion air channel 10 upstream channel resistance part 17, and conducts through cooler 14, and then joins combustion air channel 10 downstream channel resistance part 17. First valve 16 is disposed in cooling channel 15. Controller 13 is configured to control an opening of first valve 16 to be increased at a predetermined timing. In the present exemplary embodiment, controller 13 is configured to control the opening of first valve 16 to be increased in conducting an ignition operation of combustor 7.

Here, as the feed stock, those selected from a gas containing an organic compound composed of at least carbon and hydrogen, among city gas containing methane as the main ingredient, natural gas, LPG and so on, kerosene, and alcohols such as methanol and ethanol can be used. The city gas means a gas supplied to each home or the like via piping from a gas company.

The feed stock contains not only a sulfur compound derived from the feed stock, but also sulfides or sulfur compounds such as mercaptans added as an odorant for the purpose of detecting leakage. Concrete examples include tertiary-butylmercaptan (TBM), dimethyl sulfide (DMS), tetrahydrothiophene (THT), carbonyl sulfide (COS), and hydrogen sulfide.

The feed stock is fed to feed stock flow controller 2, and after undergoing control of the flow rate by feed stock flow controller 2, the feed stock is mixed with part of the generated gas containing hydrogen as the main ingredient, and fed to hydro-desulfurizer 3 whose temperature is controlled within the range from 200°C to 300°C.

The hydro-desulfurizing agent to be filled into hydro-desulfurizer 3 includes a hydrogen sulfide generating agent that generates hydrogen sulfide from a sulfur compound by hydrogenation reaction, and a hydrogen sulfide adsorbent that adsorbs hydrogen sulfide.

Here, as the hydrogen sulfide generating agent, for example, a Co-Mo catalyst can be recited. As the hydrogen sulfide adsorbent, for example, zinc oxide can be recited. A catalyst having the functions of both the hydrogen sulfide generating agent and the hydrogen sulfide adsorbent may also be used. As such a catalyst, for example, a Cu-Zn-Ni catalyst and a Cu-Zn-Fe catalyst can be recited. The hydro-desulfurizing agent to be filled into hydro-desulfurizer 3 is given merely for exemplification rather than for limiting the present invention.

The feed stock desulfurized in hydro-desulfurizer 3 passes through piping 4, and is mixed with the water fed from water feeder 5, and after passing through a water evaporation part where the water is heated to turn into water vapor, the mixture is fed to reformer 6.

Reformer 6 generates a hydrogen-containing gas composed of hydrogen, carbon dioxide, and carbon monoxide by steam reforming reaction using the feed stock and water vapor. The hydrogen-containing gas is fed to fuel cell 8 via a carbon monoxide decreasing part that decreases carbon monoxide which is a poisoning substance for fuel cell 8.

Inside reformer 6, a reforming catalyst is disposed. The reforming catalyst allows progression of reforming reaction, and a hydrogen-containing gas can be generated from the feed stock and water. The heat required for the reforming reaction is supplied from combustor 7.

As the reforming catalyst, generally, at least one selected from the group consisting of noble metal catalysts such as Pt, Ru, and Rh and Ni is preferably used. In the present example, a reforming catalyst containing Ru is used.

Combustor 7 heats reformer 6 by combusting a hydrogen-containing gas discharged from fuel cell 8 or by combusting the gas discharged from reformer 6. Combustor 7 may be supplied with other gases in addition to a hydrogen-containing gas as a fuel.

The air required for combustion is fed to combustor 7 from air feeder 9 via combustion air channel 10. The combustion gas at high temperature generated by combustor 7 passes through heat exchange channel 11 and heats reformer 6 from 450°C to 650°C, and is then discharged from combustion exhaust gas route 12.

Hydro-desulfurizer 3 is disposed in the vicinity of reformer 6 so that hydro-desulfurizer 3 is heated to a predetermined temperature ranging from 200°C to 300°C efficiently by the use of the heat of reformer 6. Hhydro-desulfurizer 3 may be disposed in the vicinity of the carbon monoxide decreasing part. Further, cooler 14 is disposed in the position where heat exchange with hydro-desulfurizer 3 is possible.

To cooler 14, cooling channel 15 that is branched from first branch part A in the midway of combustion air channel 10 and is connected to first joining part B is connected to allow passage of the air fed from air feeder 9 as a cooling medium.

For adjusting the amount of air flowing in the channel of cooling channel 15, first valve 16 is disposed in cooling channel 15 upstream cooler 14. Between first branch part A and first joining part B of combustion air channel 10, channel resistance part 17 capable of adjusting channel resistance of combustion air channel 10 is disposed.

By providing channel resistance by channel resistance part 17, it becomes possible to feed part (predetermined percentage) of the combustion air to cooler 14 as cooling air. Here, as first valve 16, a variable orifice or an on-off valve can be used. Further, as channel resistance part 17, an orifice that can serve as channel resistance, or a variable orifice can be used.

Controller 13 controls the opening of first valve 16 according to the condition of hydrogen generating apparatus 1. Controller 13 is only required to have a control function, and includes a processing unit and a storage unit for storing a control program.

As the processing unit, an MPU or a CPU can be exemplified. As the storage unit, memory can be exemplified. Controller 13 may be embodied by a single controller that conducts centralized control, or may be embodied by a plurality of controllers that conduct distributed control in cooperation with one another.

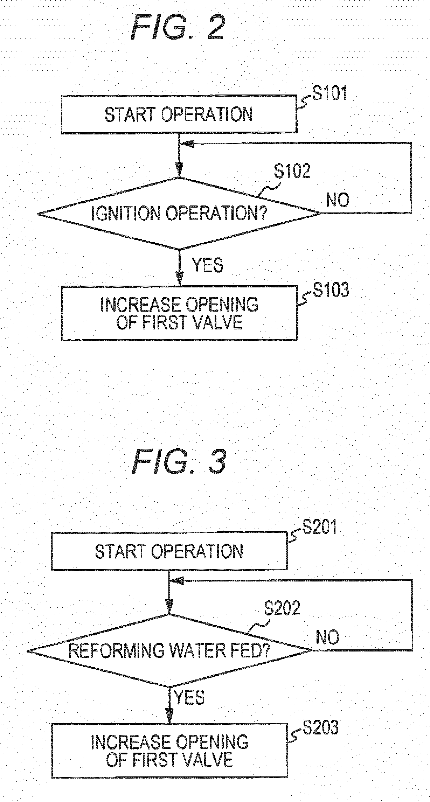

FIG. 2 is a flow chart showing one example of a method for operating hydrogen generating apparatus 1 according to the first exemplary embodiment of the present invention.

Hereinafter, referring to FIG. 2, a method for operating hydrogen generating apparatus 1 according to the first exemplary embodiment will be described. The operating method shown in FIG. 2 can be executed, for example, by controlling each part of hydrogen generating apparatus 1 by controller 13 according to the program stored in controller 13.

As the operation of hydrogen generating apparatus 1 is started (S101), whether or not an ignition operation is conducted is determined (S102). When the determination result is NO (S102, NO), step S102 is executed again. On the other hand, when the determination result is YES (S102, YES), the opening of first valve 16 is increased (S103).

Since the combustion condition is unstable directly after ignition of combustor 7, pressure fluctuation occurs in the combustion space and combustion air channel 10. Since controllability of the combustion air flow rate is impaired at this time, excess and deficiency of combustion air feed, or oscillation of combustion flame (oscillated combustion) occurs, which can lead to the problem of increase in concentration of carbon monoxide in the exhaust gas or extinguishment.

Here, by increasing the opening of first valve 16 at the time of ignition, pressure loss of combustion air channel 10 is diminished, and pressure fluctuation occurring at the time of ignition is alleviated, and unstable combustion can be checked.

That is, while combustion air is fed to combustor 7 via either one of first valve 16 and channel resistance part 17, the pressure loss caused by the combustion air decreases by increasing the opening of first valve 16 because the total amount of the combustion air is invariable.

As described above, according to the present exemplary embodiment, since the influence of the pressure fluctuation occurring at the time of ignition on the combustion air is alleviated, unstable combustion is checked.

### (Second exemplary embodiment)

Next, the second exemplary embodiment of the present invention will be described.

An apparatus configuration of hydrogen generating apparatus 1 according to the second exemplary embodiment of the present invention can be similar to that described in the first exemplary embodiment except for the content of the control by controller 13, namely the method for operating hydrogen generating apparatus 1. Accordingly, a constituent common to that in FIG. 1 is denoted by the same reference mark and name, and detailed description thereof is omitted.

In hydrogen generating apparatus 1 of the second exemplary embodiment, controller 13 controls the opening of first valve 16 to be increased when reforming water is fed to reformer 6 during startup.

Also in the second exemplary embodiment, modification similar to that in the first exemplary embodiment is possible.

FIG. 3 is a flow chart showing one example of a method for operating hydrogen generating apparatus 1 according to the second exemplary embodiment of the present invention.

Hereinafter, referring to FIG. 3, a method for operating hydrogen generating apparatus 1 according to the second exemplary embodiment will be described. The operating method shown in FIG. 3 can be executed, for example, by controlling each part of hydrogen generating apparatus 1 by controller 13 according to the program stored in controller 13.

As the operation of hydrogen generating apparatus 1 is started (S201), whether or not reforming water is fed is determined (S202). When the determination result is NO (S202, NO), step S202 is executed again. When the determination result is YES (S202, YES), the opening of first valve 16 is increased (S203).

In feeding reforming water to reformer 6, first the reforming water is heated in the water evaporation part disposed in the previous stage of reformer 6, and the state changes from water to water vapor. Since the volume of the fluid fed to reformer 6 rapidly increases with the change of state, the feed stock having been fed into reformer 6 is pushed out.

While the pushed out feed stock is combusted as a fuel by combustor 7, the rapid increase in the fuel flow rate makes the combustion condition by combustor 7 unstable, and pressure fluctuation occurs in the combustion space and combustion air channel 10. Since controllability of the combustion air flow rate is impaired at this time, excess and deficiency of combustion air feed, or oscillation of combustion flame (oscillated combustion) occurs, which can lead to the problem of increase in concentration of carbon monoxide in the exhaust gas or extinguishment.

By increasing the opening of first valve 16 in feeding reforming water, pressure loss of combustion air channel 10 decreases, and pressure fluctuation occurring in feeding reforming water is alleviated, and unstable combustion can be checked.

That is, while combustion air is fed to combustor 7 via either one of first valve 16 and channel resistance part 17, the pressure loss caused by the combustion air decreases by increasing the opening of first valve 16 because the total amount of the combustion air is invariable.

As described above, according to the present exemplary embodiment, since the influence of the pressure fluctuation occurring in feeding reforming water on the combustion air is alleviated, unstable combustion is checked.

### (Third exemplary embodiment)

Next, the third exemplary embodiment of the present invention will be described.

An apparatus configuration of hydrogen generating apparatus 1 according to the third exemplary embodiment of the present invention can be similar to that of the first exemplary embodiment except for the content of the control by controller 13, namely the method for operating hydrogen generating apparatus 1. Accordingly, a constituent common to that in FIG. 1 is denoted by the same reference mark and name, and detailed description thereof is omitted.

In hydrogen generating apparatus 1 of the third exemplary embodiment of the present invention, controller 13 controls the opening of first valve 16 to be decreased after a lapse of a first setting time from start or end of the ignition operation.

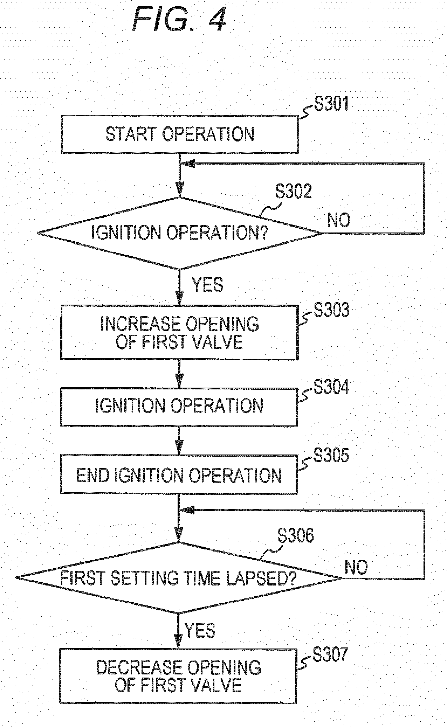

FIG. 4 is a flow chart showing one example of a method for operating hydrogen generating apparatus 1 according to the third exemplary embodiment of the present invention.

Hereinafter, referring to FIG. 4, a method for operating hydrogen generating apparatus 1 according to the third exemplary embodiment will be described. The operating method shown in FIG. 4 can be executed, for example, by controlling each part of hydrogen generating apparatus 1 by controller 13 according to the program stored in controller 13.

As the operation of hydrogen generating apparatus 1 is started (S301), whether or not an ignition operation is conducted is determined (S302). When the determination result is NO (S302, NO), step S302 is executed again. When the determination result is YES (S302, YES), the opening of first valve 16 is increased (S303).

Then, an ignition operation is conducted (S304), and after end of the ignition operation (S305), whether or not the first setting time has lapsed is determined (S306). When the determination result is NO (S306, NO), step S306 is executed again. When the determination result is YES (S306, YES), the opening of first valve 16 is decreased (S307).

When the opening of first valve 16 is increased, more air is fed to cooler 14, so that hydro-desulfurizer 3 is more cooled and the temperature rise of hydro-desulfurizer 3 is decelerated, and the startup time of hydrogen generating apparatus 1 is extended.

By decreasing the opening of first valve 16 at the point of time when the combustion condition of combustor 7 becomes stable after end of the ignition operation, the flow rate of air fed to cooler 14 is decreased, and cooling of hydro-desulfurizer 3 is alleviated.

Therefore, the temperature of hydro-desulfurizer 3 becomes easy to increase, and it becomes possible to shorten the startup time of hydrogen generating apparatus 1.

In addition, by setting the time required for the combustion condition of combustor 7 to become stable after end of the ignition operation as the first setting time, it becomes possible to shorten the startup time of hydrogen generating apparatus 1 without leading to the problem of increase in concentration of carbon monoxide in the exhaust gas or extinguishment.

The first setting time may be a time from start of the ignition operation without limited to the time after end of the ignition operation. The first setting time is only required to be a time required for the combustion condition of combustor 7 to become stable, and is set at 1 minute, for example, in the present exemplary embodiment.

### (Fourth exemplary embodiment)

Next, the fourth exemplary embodiment of the present invention will be described.

An apparatus configuration of hydrogen generating apparatus 1 according to the fourth exemplary embodiment of the present invention can be similar to that of the first exemplary embodiment except for the content of the control by controller 13, namely the method for operating hydrogen generating apparatus 1. Accordingly, a constituent common to that in FIG. 1 is denoted by the same reference mark and name, and detailed description thereof is omitted.

In hydrogen generating apparatus 1 of the fourth exemplary embodiment of the present invention, controller 13 controls the opening of first valve 16 to be decreased after a lapse of a second setting time from start of feeding reforming water.

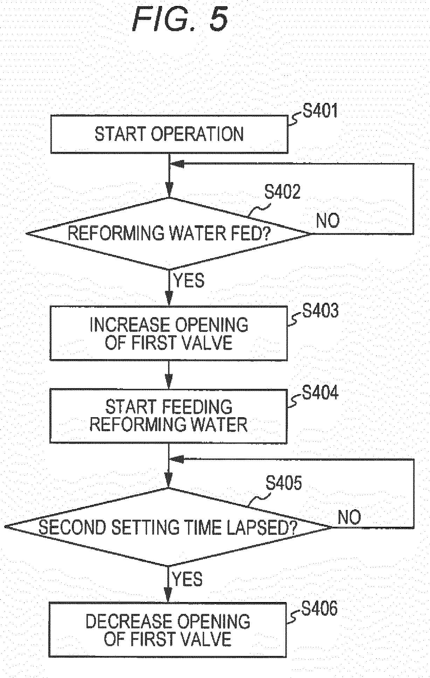

FIG. 5 is a flow chart showing one example of a method for operating hydrogen generating apparatus 1 according to the fourth exemplary embodiment of the present invention.

Hereinafter, referring to FIG. 5, a method for operating hydrogen generating apparatus 1 according to the fourth exemplary embodiment of the present invention will be described. The operating method shown in FIG. 5 can be executed, for example, by controlling each part of hydrogen generating apparatus 1 by controller 13 according to the program stored in controller 13.

As the operation of hydrogen generating apparatus 1 is started (S401), whether or not reforming water is fed is determined (S402). When the determination result is NO (S402, NO), step S402 is executed again. When the determination result is YES (S402, YES), the opening of first valve 16 is increased (S403).

Thereafter, feed of reforming water is started (S404), and then whether or not the second setting time has lapsed is determined (S405). When the determination result is NO (S405, NO), step S405 is executed again. When the determination result is YES (S405, YES), the opening of first valve 16 is decreased (S406).

When the opening of first valve 16 is increased, more air is fed to cooler 14, so that hydro-desulfurizer 3 is more cooled and the temperature rise of hydro-desulfurizer 3 is decelerated, and the startup time of hydrogen generating apparatus 1 is extended.

By decreasing the opening of first valve 16 at the point of time when the combustion condition of combustor 7 becomes stable after start of feeding reforming water, the flow rate of air fed to cooler 14 is decreased, and cooling of hydro-desulfurizer 3 is alleviated.

Therefore, the temperature of hydro-desulfurizer 3 becomes easy to increase, and it becomes possible to shorten the startup time of hydrogen generating apparatus 1.

By setting the time required for the combustion condition of combustor 7 to become stable after start of feeding reforming water as the second setting time, it becomes possible to shorten the startup time of hydrogen generating apparatus 1 without leading to the problem of increase in concentration of carbon monoxide in the exhaust gas or extinguishment.

The second setting time is only required to be a time required for the combustion condition of combustor 7 to become stable after start of feeding reforming water, and is set at 5 minutes, for example, in the present exemplary embodiment.

### (Fifth exemplary embodiment)

Next, the fifth exemplary embodiment of the present invention will be described.

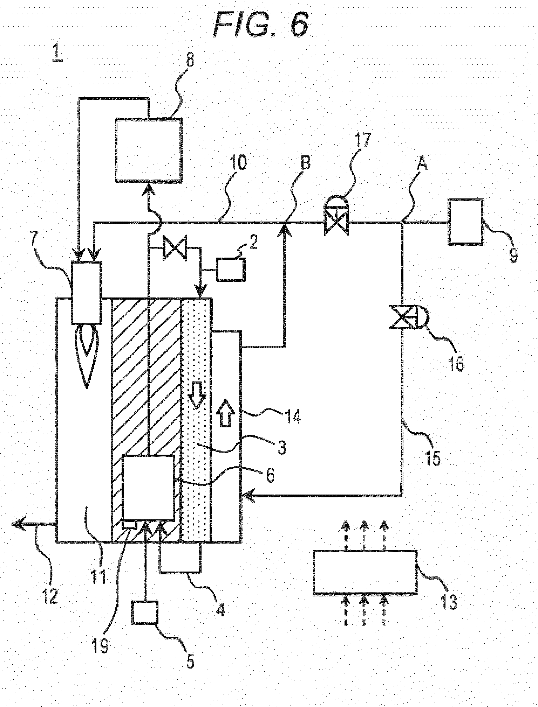

FIG. 6 is a block diagram schematically showing one example of a general configuration of hydrogen generating apparatus 1 according to the fifth exemplary embodiment of the present invention.

As illustrated in FIG. 6, hydrogen generating apparatus 1 according to the fifth exemplary embodiment of the present invention includes reformer 6, combustor 7, air feeder 9, combustion air channel 10, hydro-desulfurizer 3, cooler 14, channel resistance part 17, cooling channel 15, first valve 16, first temperature detector 19, and controller 13.

Reformer 6 reforms a feed stock containing hydrocarbon to generate a hydrogen-containing gas. Combustor 7 combusts a combustion gas which is a feed stock or a hydrogen-containing gas, and air to heat reformer 6. Air feeder 9 feeds air to combustor 7. Combustion air channel 10 connects combustor 7 and air feeder 9. Hydro-desulfurizer 3 removes a sulfur component in a feed stock by hydrogenation reaction. Cooler 14 cools hydro-desulfurizer 3 by circulating air. Channel resistance part 17 is disposed in combustion air channel 10. Cooling channel 15 branches from combustion air channel 10 upstream channel resistance part 17, and conducts through cooler 14, and then joins combustion air channel 10 downstream channel resistance part 17. First valve 16 is disposed in cooling channel 15. First temperature detector 19 detects the temperature of reformer 6. Controller 13 is configured to control an opening of first valve 16 to be increased in conducting the ignition operation of combustor 7 and control the opening of first valve 16 to be decreased when the temperature detected by first temperature detector 19 reaches the first threshold or higher during startup.

Here, first temperature detector 19 is disposed in the position where first temperature detector 19 can detect the temperature of reformer 6. As first temperature detector 19, for example, a thermocouple or the like can be used.

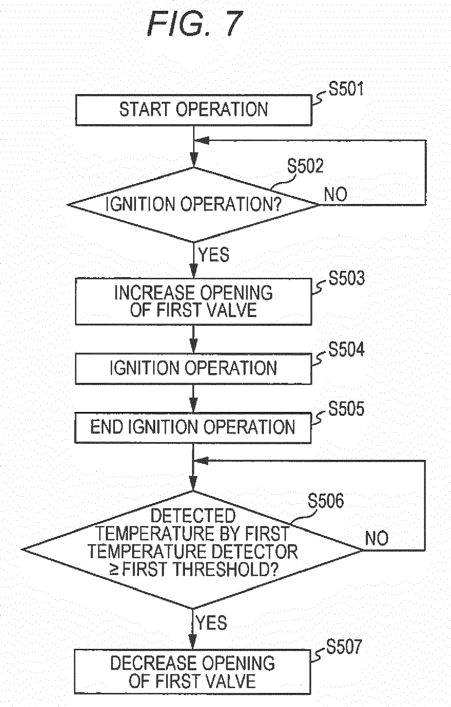

FIG. 7 is a flow chart showing one example of a method for operating hydrogen generating apparatus 1 according to the fifth exemplary embodiment of the present invention.

Hereinafter, referring to FIG. 7, a method for operating hydrogen generating apparatus 1 according to the fifth exemplary embodiment of the present invention will be described. The operating method shown in FIG. 7 can be executed, for example, by controlling each part of hydrogen generating apparatus 1 by controller 13 according to the program stored in controller 13.

As the operation of hydrogen generating apparatus 1 is started (S501), whether or not an ignition operation is conducted is determined (S502). When the determination result is NO (S502, NO), step S502 is executed again. When the determination result is YES (S502, YES), the opening of first valve 16 is increased (S503).

Then, an ignition operation is conducted (S504), and after end of the ignition operation (S505), whether or not the temperature detected by first temperature detector 19 is the first threshold or higher is determined (S506). When the determination result is NO (S506, NO), step S506 is executed again. When the determination result is YES (S506, YES), the opening of first valve 16 is decreased (S507).

When the opening of first valve 16 is increased, more air is fed to cooler 14, so that hydro-desulfurizer 3 is more cooled and the temperature rise of hydro-desulfurizer 3 is decelerated, and the startup time of hydrogen generating apparatus 1 is extended.

By decreasing the opening of first valve 16 at the point of time when the combustion condition of combustor 7 becomes stable, the flow rate of air fed to cooler 14 is decreased, and cooling of hydro-desulfurizer 3 is alleviated. Therefore, the temperature of hydro-desulfurizer 3 becomes easy to increase, and it becomes possible to shorten the startup time of hydrogen generating apparatus 1.

By setting the temperature detected by first temperature detector 19 when the combustion condition of combustor 7 becomes stable as the first threshold, it becomes possible to shorten the startup time of the hydrogen generating apparatus 1 without leading to the problem of increase in concentration of carbon monoxide in the exhaust gas or extinguishment.

The first threshold is only required to be a temperature detected by first temperature detector 19 when the combustion condition of combustor 7 becomes stable, and is set at 300°C, for example, in the present exemplary embodiment.

While whether or not the temperature detected by first temperature detector 19 after end of the ignition operation is the first threshold or higher is determined in the present exemplary embodiment, the timing of the determination is not necessarily limited to after end of the ignition operation, but may be after start of the ignition operation or after start of feeding reforming water, for example.

### (Sixth exemplary embodiment)

Next, the sixth exemplary embodiment of the present invention will be described.

An apparatus configuration of hydrogen generating apparatus 1 according to the sixth exemplary embodiment of the present invention can be similar to that of the first exemplary embodiment or the fifth exemplary embodiment except for the content of the control by controller 13, namely the method for operating hydrogen generating apparatus 1. Accordingly, a constituent common to that in FIG. 1 or FIG. 6 is denoted by the same reference mark and name, and detailed description thereof is omitted.

In hydrogen generating apparatus 1 of the sixth exemplary embodiment, controller 13 controls the feed amount of air from air feeder 9 to be increased before decreasing the opening of first valve 16.

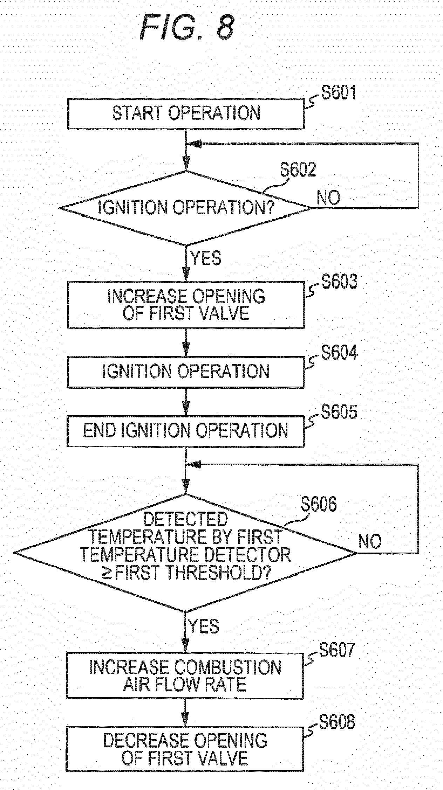

FIG. 8 is a flow chart showing one example of a method for operating hydrogen generating apparatus 1 according to the sixth exemplary embodiment of the present invention.

Hereinafter, referring to FIG. 8, a method for operating hydrogen generating apparatus 1 according to the sixth exemplary embodiment will be described. The operating method shown in FIG. 8 can be executed, for example, by controlling each part of hydrogen generating apparatus 1 by controller 13 according to the program stored in controller 13.

As the operation of hydrogen generating apparatus 1 is started (S601), whether or not an ignition operation is conducted is determined (S602). When the determination result is NO (S602, NO), step S602 is executed again. When the determination result is YES (S602, YES), the opening of first valve 16 is increased (S603).

Then, an ignition operation is conducted (S604), and after end of the ignition operation (S605), whether or not the temperature detected by first temperature detector 19 is the first threshold or higher is determined (S606). When the determination result is NO (S606, NO), step S506 is executed again. When the determination result is YES (S606, YES), the combustion air flow rate from air feeder 9 is increased (S607), and then the opening of first valve 16 is decreased (S608).

Directly after decreasing the opening of first valve 16, the flow rate of combustion air fed from air feeder 9 decreases because the pressure loss of combustion air channel 10 increases. Decrease of a certain amount in combustion air flow rate with constant fuel results in decrease of a certain amount in air-fuel ratio which is a ratio between the combustion air and the fuel, and increase in concentration of carbon monoxide in the exhaust gas.

Here, when the air-fuel ratio increases by a certain amount with respect to the optimal value, the rate of increase in concentration of carbon monoxide in the exhaust gas is lower than the rate of increase in concentration of carbon monoxide in the exhaust gas when the air-fuel ratio decreases by a certain amount from the optimal value.

Therefore, by increasing the combustion air flow rate from air feeder 9 before decreasing the opening of first valve 16, it is possible to check the increase in concentration of carbon monoxide in the exhaust gas occurring when the opening of first valve 16 is decreased, and to operate hydrogen generating apparatus 1 stably.

The process before increase in the combustion air flow rate (S607) is not limited to the present exemplary embodiment, and the combustion air flow rate may be increased after start of feeding reforming water and combustion in combustor 7 becomes stable, for example, because it is only required that the combustion air flow rate is increased (S607) before the opening of first valve 16 is decreased (S608).

### (Seventh exemplary embodiment)

Next, the seventh exemplary embodiment of the present invention will be described.

An apparatus configuration of hydrogen generating apparatus 1 according to the seventh exemplary embodiment of the present invention can be similar to that of the first exemplary embodiment or the fifth exemplary embodiment except for the content of the control by controller 13, namely the method for operating hydrogen generating apparatus 1. Accordingly, a constituent common to that in FIG. 1 or FIG. 6 is denoted by the same reference mark and name, and detailed description thereof is omitted.

In hydrogen generating apparatus 1 of the seventh exemplary embodiment, controller 13 controls the feed amount of air from air feeder 9 to be decreased and the opening of first valve 16 to be decreased.

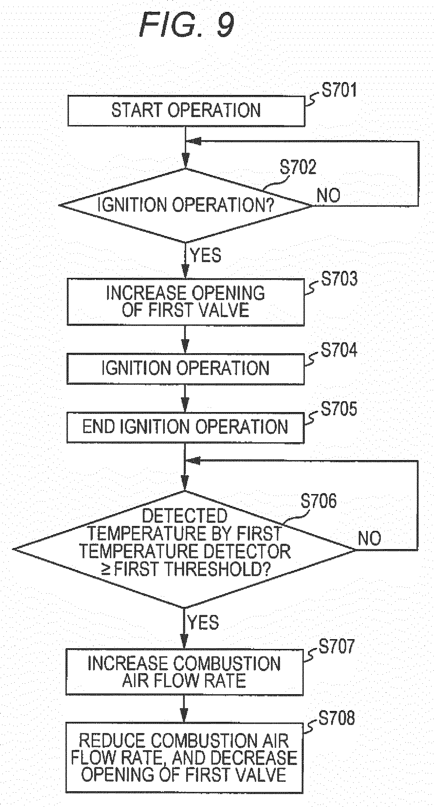

FIG. 9 is a flow chart showing one example of a method for operating hydrogen generating apparatus 1 according to the seventh exemplary embodiment of the present invention.

Hereinafter, referring to FIG. 9, a method for operating hydrogen generating apparatus 1 according to the seventh exemplary embodiment will be described. The operating method shown in FIG. 9 can be executed, for example, by controlling each part of hydrogen generating apparatus 1 by controller 13 according to the program stored in controller 13.

As the operation of hydrogen generating apparatus 1 is started (S701), whether or not an ignition operation is conducted is determined (S702). When the determination result is NO (S702, NO), step S702 is executed again. When the determination result is YES (S702, YES), the opening of first valve 16 is increased (S703).

Then, an ignition operation is conducted (S704), and after end of the ignition operation (S705), whether or not the temperature detected by first temperature detector 19 is the first threshold or higher is determined (S706). When the determination result is NO (S706, NO), step S706 is executed again. When the determination result is YES (S706, YES), the combustion air flow rate from air feeder 9 is increased (S707), and then the combustion air flow rate from air feeder 9 is reduced and the opening of first valve 16 is decreased (S708).

As described above, the amount of air fed from air feeder 9 decreases directly after decreasing the opening of first valve 16. Thereafter, control is exerted to feed a predetermined amount of air by increasing the manipulated variable of air feeder 9.

That is, an optimum air-fuel ratio is achieved directly after the opening of first valve 16 is decreased because the combustion air flow rate is increased before the opening of first valve 16 is decreased, however, after that time, the air-fuel ratio deviates as the combustion air flow rate is recovered (increased).

Therefore, by decreasing the opening of the first valve and decreasing the combustion air flow rate, it is possible to check the deviation of the air-fuel ratio. Hence, it is possible to check unstable combustion in combustor 7, and it becomes possible to operate hydrogen generating apparatus 1 stably.

The process before increasing the combustion air flow rate (S707) is not limited to the present exemplary embodiment, and for example, the combustion air flow rate may be increased after feed of reforming water is started and combustion in combustor 7 becomes stable.

Also, controller 13 of the first exemplary embodiment to the seventh exemplary embodiment may control the opening of first valve 16 to be increased at the time of connection when feed of a hydrogen-containing gas of hydrogen generating apparatus 1 to a hydrogen utilizing device (fuel cell 8) starts after completion of startup.

At the time of connection when feed of a hydrogen-containing gas of hydrogen generating apparatus 1 to fuel cell 8 starts, the channel of gas to be combusted in combustor 7 is turned over, the amount of a combustion gas to be fed to combustor 7 temporarily changes, the combustion condition in combustor 7 becomes unstable, and pressure fluctuation occurs in the combustion space and combustion air channel 10. Since controllability of the combustion air flow rate is impaired at this time, excess and deficiency of combustion air feed, or oscillation of combustion flame (oscillated combustion) occurs, which can lead to the problem of increase in concentration of carbon monoxide in the exhaust gas or extinguishment.

Here, by increasing the opening of the first valve at the time of connection when feed of a hydrogen-containing gas of hydrogen generating apparatus 1 to fuel cell 8 starts, the pressure loss of combustion air channel 10 decreases, and pressure fluctuation occurring at the time of connection when feed of a hydrogen-containing gas of hydrogen generating apparatus 1 to fuel cell 8 starts is alleviated, and unstable combustion can be checked.

That is, while the combustion air is fed to combustor 7 via either one of first valve 16 and channel resistance part 17, the pressure loss caused by the combustion air decreases by increasing the opening of the first valve because the total amount of the combustion air is invariable.

Therefore, the influence of the pressure fluctuation occurring at the time of connection when feed of a hydrogen-containing gas of hydrogen generating apparatus 1 to fuel cell 8 starts is alleviated, and unstable combustion is checked.

From the above description, various improvements and other exemplary embodiments of the present invention are apparent to a person skilled in the art. Therefore, the above description should be interpreted merely as illustration, and is provided for the purpose of teaching a person skilled in the art the best mode for carrying out the present invention. Details of at least either of the structure and the function can be substantially changed without departing from the spirit of the present invention.

As described above, hydrogen generating apparatus 1 of the exemplary embodiment includes reformer 6 for reforming a feed stock containing hydrocarbon to generate a hydrogen-containing gas, combustor 7 for heating reformer 6 by combusting a combustion gas which is a feed stock or a hydrogen-containing gas and air, air feeder 9 for feeding air to combustor 7, and combustion air channel 10 for connecting combustor 7 and air feeder 9. Hydrogen generating apparatus 1 also includes hydro-desulfurizer 3 for removing a sulfur component in a feed stock by hydrogenation reaction, cooler 14 for cooling hydro-desulfurizer 3 by circulating air, channel resistance part 17 disposed in combustion air channel 10, and cooling channel 15 that branches from combustion air channel 10 upstream channel resistance part 17, and conducts through cooler 14, and then joins combustion air channel 10 downstream channel resistance part 17. Further, hydrogen generating apparatus 1 includes first valve 16 disposed in cooling channel 15, and controller 13 configured to control an opening of first valve 16 to be increased at a predetermined timing.

In the above configuration, the combustion air is fed to combustor 7 via either one of first valve 16 and channel resistance part 17, and the total amount of the combustion air is invariable. Therefore, by increasing the opening of first valve 16 at a predetermined timing, the pressure loss of combustion air channel 10 decreases, and the pressure loss caused by the combustion air decreases.

Therefore, the influence of the pressure fluctuation on the combustion air is alleviated, and hence unstable combustion is checked, and it becomes possible to operate hydrogen generating apparatus 1 stably.

Further, controller 13 may be configured to control the opening of first valve 16 to be increased in conducting an ignition operation of combustor 7.

With such a configuration, when the opening of first valve 16 is increased at the time of ignition, the pressure loss of combustion air channel 10 decreases, and the pressure loss caused by the combustion air is decreased. Therefore, the influence of the pressure fluctuation occurring at the time of ignition on the combustion air is alleviated, and unstable combustion is checked, and it becomes possible to operate hydrogen generating apparatus 1 stably.

Also, controller 13 may be configured to control the opening of first valve 16 to be increased in feeding reforming water to reformer 6 during startup.

In feeding reforming water to reformer 6, first the reforming water is heated in the previous stage of reformer 6, and the state changes from water to water vapor. Since the volume of the fluid fed to reformer 6 rapidly increases with the change of state, the feed stock having been fed into reformer 6 is pushed out.

While the pushed out feed stock is combusted as a fuel by combustor 7, the rapid increase in the fuel flow rate makes the combustion condition by combustor 7 unstable, and pressure fluctuation occurs in the combustion space and the combustion air channel. Since controllability of the combustion air flow rate is impaired at this time, a conventional hydrogen generating apparatus has a possibility that increase in concentration of carbon monoxide in the exhaust gas or extinguishment occurs due to occurrence of excess and deficiency of combustion air feed, and oscillation of combustion flame (oscillated combustion).

In contrast to this, according to the aforementioned configuration, the combustion air is fed to combustor 7 via either one of first valve 16 and channel resistance part 17, and the total amount of the combustion air is invariable. Therefore, by increasing the opening of first valve 16 in feeding reforming water, the pressure loss of combustion air channel 10 decreases, and the pressure loss caused by the combustion air decreases.

Therefore, the influence of the pressure fluctuation occurring in feeding reforming water is alleviated, and unstable combustion is checked, and it becomes possible to operate hydrogen generating apparatus 1 stably.

Also, controller 13 may be configured to control the opening of first valve 16 to be decreased after a lapse of the first setting time from start or end of the ignition operation.

When the opening of first valve 16 is increased by the control of controller 13, more air is fed to cooler 14 compared with the case where the opening of first valve 16 is not increased, so that hydro-desulfurizer 3 is more cooled and the temperature rise of hydro-desulfurizer 3 is decelerated, and the startup time of hydrogen generating apparatus 1 is extended.

Then, by decreasing the opening of first valve 16 at the point of time when the combustion condition of combustor 7 becomes stable after end of the ignition operation (after a lapse of the first setting time from the point of time of starting the ignition operation or ending the ignition operation), the flow rate of air fed to cooler 14 is decreased, and cooling of hydro-desulfurizer 3 is alleviated.

Therefore, the temperature of hydro-desulfurizer 3 becomes easy to increase, and it becomes possible to shorten the startup time of hydrogen generating apparatus 1 compared with the case where the opening of first valve 16 is not decreased. In addition, by setting the time required for the combustion condition of combustor 7 to become stable from the point of time of starting the ignition operation or ending the ignition operation as the first setting time, it becomes possible to shorten the startup time of hydrogen generating apparatus 1 without leading to the problem of increase in concentration of carbon monoxide in the exhaust gas or extinguishment.

Also, controller 13 may be configured to control the opening of first valve 16 to be decreased after a lapse of the second setting time from start of feeding reforming water.

When the opening of first valve 16 is increased by the control of controller 13 in feeding reforming water, more air is fed to cooler 14 compared with the case where the opening of first valve 16 is not increased, so that hydro-desulfurizer 3 is more cooled and the temperature rise of hydro-desulfurizer 3 is decelerated, and the startup time of hydrogen generating apparatus 1 is extended.

By decreasing the opening of first valve 16 at the point of time when the combustion condition of combustor 7 becomes stable after start of feeding reforming water (after a lapse of the second setting time from the point of time of start of feeding reforming water), the flow rate of air fed to cooler 14 is decreased, and cooling of hydro-desulfurizer 3 is alleviated.

Therefore, the temperature of hydro-desulfurizer 3 becomes easy to increase, and it becomes possible to shorten the startup time of hydrogen generating apparatus 1 compared with the case where the opening of first valve 16 is not decreased. In addition, by setting the time required for the combustion condition of combustor 7 to become stable after start of feeding reforming water as the second setting time, it becomes possible to shorten the startup time of hydrogen generating apparatus 1 without leading to the problem of increase in concentration of carbon monoxide in the exhaust gas or extinguishment.

Further, the hydrogen generating apparatus may be configured such that first temperature detector 19 for detecting the temperature of reformer 6 is further provided, and controller 13 controls the opening of first valve 16 to be decreased when the temperature detected by first temperature detector 19 reaches the first threshold or higher.

When the opening of first valve 16 is increased by the control of controller 13, more air is fed to cooler 14 compared with the case where the opening of first valve 16 is not increased, so that hydro-desulfurizer 3 is more cooled and the temperature rise of hydro-desulfurizer 3 is decelerated, and the startup time of hydrogen generating apparatus 1 is extended.

By decreasing the opening of first valve 16 at the point of time when the combustion condition of combustor 7 becomes stable (at the time when the temperature of reformer 6 detected by first temperature detector 19 reaches the first threshold or higher), the flow rate of air fed to cooler 14 is decreased, and cooling of hydro-desulfurizer 3 is alleviated.

Therefore, the temperature of hydro-desulfurizer 3 becomes easy to increase, and it becomes possible to shorten the startup time of hydrogen generating apparatus 1 compared with the case where the opening of first valve 16 is not decreased. In addition, by setting the temperature detected by first temperature detector 19 when the combustion condition of combustor 7 becomes stable as the first threshold, it becomes possible to shorten the startup time of hydrogen generating apparatus 1 without leading to the problem of increase in concentration of carbon monoxide in the exhaust gas or extinguishment.

Also, controller 13 may be configured to control the feed amount of air from air feeder 9 to be increased before decreasing the opening of first valve 16.

Directly after decreasing the opening of first valve 16, the flow rate of combustion air fed from air feeder 9 decreases because the pressure loss of combustion air channel 10 increases. Decrease of a certain amount in the combustion air flow rate with constant fuel results in decrease of a certain amount in air-fuel ratio which is a ratio between the combustion air and the fuel, and increase in concentration of carbon monoxide in the exhaust gas.

Here, when the air-fuel ratio increases by a certain amount with respect to the optimal value, the rate of increase in concentration of carbon monoxide in the exhaust gas is lower than the rate of increase in concentration of carbon monoxide in the exhaust gas when the air-fuel ratio decreases by a certain amount from the optimal value

Therefore, by increasing the combustion air flow rate from air feeder 9 before decreasing the opening of first valve 16, it is possible to check the increase in concentration of carbon monoxide in the exhaust gas occurring when the opening of first valve 16 is decreased, and to operate the hydrogen generating apparatus 1 stably.

Further, controller 13 may be configured to control the feed amount of air from air feeder 9 to be decreased and to decrease the opening of first valve 16.

The amount of air fed from air feeder 9 decreases directly after decreasing the opening of first valve 16. Thereafter, control is exerted to feed a predetermined amount of air by increasing the manipulated variable of air feeder 9.

That is, an optimum air-fuel ratio is achieved directly after decreasing the opening of first valve 16 because the combustion air flow rate is increased before decreasing the opening of first valve 16, and thereafter, the air-fuel ratio deviates as the combustion air flow rate is recovered (increased).

Therefore, by decreasing the opening of first valve 16 and decreasing the combustion air flow rate, it is possible to check the deviation of the air-fuel ratio. Hence, it is possible to check unstable combustion in combustor 7, and it becomes possible to operate hydrogen generating apparatus 1 stably.

Also, controller 13 may control the opening of first valve 16 to be increased at the time of connection when feed of a hydrogen-containing gas of hydrogen generating apparatus 1 to a hydrogen utilizing device starts after completion of startup.

### (Eighth exemplary embodiment)

Next, hydrogen generating apparatus 101 of the eighth exemplary embodiment of the present invention will be described.

### [Configuration of hydrogen generating apparatus]

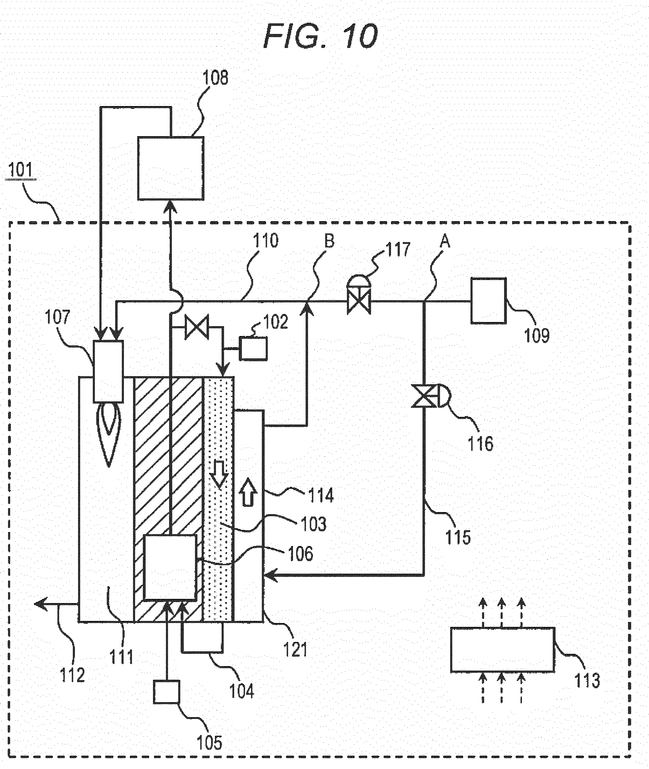

FIG. 10 is a block diagram schematically showing one example of a general configuration of hydrogen generating apparatus 101 according to the eighth exemplary embodiment of the present invention.

As illustrated in FIG. 10, hydrogen generating apparatus 101 according to the eighth exemplary embodiment of the present invention includes reformer 106, combustor 107, air feeder 109, combustion air channel 110, hydro-desulfurizer 103, cooler 114, channel resistance part 117, cooling channel 115, first valve 116, and controller 113.

Reformer 106 reforms a feed stock containing hydrocarbon to generate a hydrogen-containing gas. Combustor 107 combusts a combustion gas which is a feed stock or a hydrogen-containing gas, and air to heat reformer 106. Air feeder 109 feeds air to combustor 107. Combustion air channel 110 connects combustor 107 and air feeder 109. Hydro-desulfurizer 103 removes a sulfur component in a feed stock by hydrogenation reaction. Cooler 114 cools hydro-desulfurizer 103 by circulating air. Channel resistance part 117 is disposed in combustion air channel 110. Cooling channel 115 branches from combustion air channel 110 upstream channel resistance part 117, and conducts through cooler 114, and then joins combustion air channel 110 downstream channel resistance part 117. First valve 116 is disposed in cooling channel 115. Controller 113 is configured to control an opening of first valve 116 to be increased at a predetermined timing during a stopping process in the present exemplary embodiment.

Here, as the feed stock, those selected from a gas containing an organic compound composed of at least carbon and hydrogen, e.g., city gas containing methane as the main ingredient, natural gas, and LPG, kerosene, and alcohols such as methanol and ethanol can be used. The city gas means a gas supplied to each home or the like via piping from a gas company.

The feed stock gas contains not only a sulfur compound derived from the feed stock gas, but also sulfides or sulfur compounds such as mercaptans added as an odorant for the purpose of detecting leakage. Concrete examples include tertiary-butylmercaptan (TBM), dimethyl sulfide (DMS), tetrahydrothiophene (THT), carbonyl sulfide (COS), and hydrogen sulfide.

The feed stock is fed to feed stock flow controller 102, and after undergoing control of the flow rate by feed stock flow controller 102, the feed stock is mixed with part of the generated gas containing hydrogen as the main ingredient, and fed to hydro-desulfurizer 103 whose temperature is controlled within the range from 200°C to 300°C. The hydro-desulfurizing agent to be filled into hydro-desulfurizer 103 includes a hydrogen sulfide generating agent that generates hydrogen sulfide from a sulfur compound by hydrogenation reaction, and a hydrogen sulfide adsorbent that adsorbs hydrogen sulfide. As the hydrogen sulfide generating agent, for example, a Co-Mo catalyst can be recited. As the hydrogen sulfide adsorbent, for example, zinc oxide can be recited. A catalyst having the functions of both the hydrogen sulfide generating agent and the hydrogen sulfide adsorbent may also be used. As such a catalyst, for example, a Cu-Zn-Ni catalyst and a Cu-Zn-Fe catalyst can be recited. The hydro-desulfurizing agent to be filled into hydro-desulfurizer 3 is given merely for exemplification rather than for limiting the present invention.

The desulfurized feed stock passes through piping 104, and is mixed with the water fed from water feeder 105, and after passing through a water evaporation part where the water is heated to turn into water vapor, the mixture is fed to reformer 106. Reformer 106 generates a hydrogen-containing gas composed of hydrogen, carbon dioxide, and carbon monoxide by steam reforming reaction using the feed stock and water vapor.

The hydrogen-containing gas is fed to hydrogen utilizing device 108 via a carbon monoxide decreasing part that decreases carbon monoxide which is a poisoning substance for hydrogen utilizing device 108. Inside reformer 106, a reforming catalyst is disposed. The reforming catalyst allows progression of reforming reaction, and a hydrogen-containing gas can be generated from the feed stock and water. The heat required for the reforming reaction is supplied from combustor 107. As the reforming catalyst, generally, at least one selected from the group consisting of noble metal catalysts such as Pt, Ru, and Rh and Ni is preferably used. In the present example, a reforming catalyst containing Ru is used.

Combustor 107 heats reformer 106 by combusting a hydrogen-containing gas discharged from hydrogen utilizing device 108 or by combusting the gas discharged from reformer 106. Combustor 107 may be supplied with other gases in addition to a hydrogen-containing gas as a fuel. The air required for combustion is fed to combustor 107 from air feeder 109 via combustion air channel 110. The combustion gas at high temperature generated by combustor 107 passes through heat exchange channel 111 and heats reformer 106 from 450°C to 650°C, and is then discharged from combustion exhaust gas route 112.

Hydro-desulfurizer 103 is disposed in the vicinity of reformer 106 so that hydro-desulfurizer 103 is heated to a predetermined temperature ranging from 200°C to 300°C efficiently by the use of the heat of reformer 106. Since hydro-desulfurizer 103 and reformer 106 are integrally formed, it is possible to heat hydro-desulfurizer 103 efficiently by reformer 106, and to operate hydrogen generating apparatus 101 efficiently.

Hydro-desulfurizer 103 may be disposed in the vicinity of the carbon monoxide decreasing part. Hydro-desulfurizer 103 is provided with cooler 114 in the position where heat exchange with hydro-desulfurizer 103 is possible. To cooler 114, cooling channel 115 that is branched from first branch part A in the midway of combustion air channel 110 and is connected to first joining part B is connected to allow passage of the air fed from air feeder 109 as a cooling medium.

For adjusting the amount of air flowing in the channel of cooling channel 115, first valve 116 is disposed in cooling channel 115, and between first branch part A and first joining part B of combustion air channel 110, channel resistance part 117 capable of adjusting channel resistance is disposed. By providing channel resistance by channel resistance part 117, it becomes possible to feed part of the combustion air to cooler 114 as cooling air. Here, as first valve 116, a variable orifice or an on-off valve can be used. Further, as channel resistance part 117, an orifice that can serve as channel resistance, or a variable orifice can be used.

Controller 113 controls the opening of first valve 116 according to the condition of hydrogen generating apparatus 101. Controller 113 is only required to have a control function, and includes a processing unit and a storage unit for storing a control program. As the processing unit, an MPU or a CPU can be exemplified. As the storage unit, memory can be exemplified. Controller 113 may be embodied by a single controller that conducts centralized control, or may be embodied by a plurality of controllers that conduct distributed control in cooperation with one another.

### [Operating method]

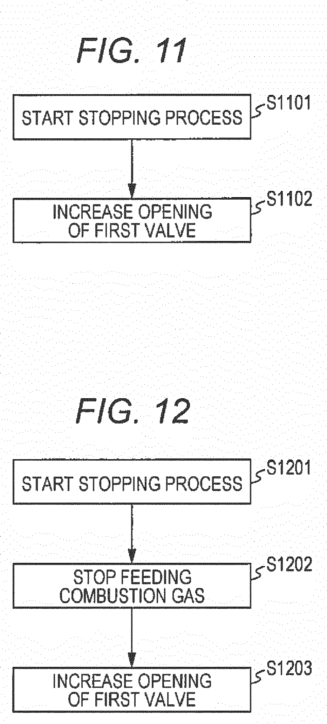

FIG. 11 is a flow chart showing one example of a method for operating hydrogen generating apparatus 101 according to the eighth exemplary embodiment of the present invention.

Hereinafter, referring to FIG. 11, a method for operating hydrogen generating apparatus 101 according to the eighth exemplary embodiment of the present invention will be described. The operating method shown in FIG. 11 can be executed, for example, by controlling each part of hydrogen generating apparatus 101 by controller 113 according to the program stored in controller 113.

As a stopping process of hydrogen generating apparatus 101 is started (S1101), an opening of first valve 116 is increased (S1102).

In the stopping process, a large amount of air is fed by air feeder 109 to cool hydrogen generating apparatus 101. However, since combustion air channel 110 is provided with channel resistance part 117 which is channel resistance, the load exerted on air feeder 109 increases, and the manipulated variable of air feeder 109 reaches the upper limit. Accordingly, a predetermined amount of air required in cooling cannot be fed, and the stopping time is extended. The extended stopping time causes the problems of delay of the next startup and extension of the time before power generation, and extension of maintenance time.

Here, in the stopping process, as the opening of first valve 116 is increased, the resistance of combustion air channel 110 is decreased, and a predetermined amount of air required for cooling can be fed. In other words, the cooling air is fed to combustor 107 via either one of first valve 116 and channel resistance part 117. Since the total amount of the cooling air is invariable, resistance exerted on combustion air channel 110 where the total amount of the cooling air passes through is decreased by increasing the opening of first valve 116. Therefore, the load exerted on air feeder 109 is alleviated, and a predetermined amount of air can be fed to hydro-desulfurizer 103 and combustor 107 in cooling while the manipulated variable of air feeder 109 does not reach the upper limit, and the stopping time of hydrogen generating apparatus 101 can be shortened.

As described above, hydrogen generating apparatus 101 according to the eighth exemplary embodiment includes reformer 106 for reforming a feed stock containing hydrocarbon to generate a hydrogen-containing gas, combustor 107 for heating reformer 106 by combusting a combustion gas which is a feed stock or a hydrogen-containing gas and air, and air feeder 109 for feeding air to combustor 107. Hydrogen generating apparatus 101 also includes combustion air channel 110 for connecting combustor 107 and air feeder 109, hydro-desulfurizer 103 for removing a sulfur component in a feed stock by hydrogenation reaction, and cooler 114 for cooling hydro-desulfurizer 103 by circulating air. Further, hydrogen generating apparatus 101 includes channel resistance part 117 disposed in combustion air channel 110, cooling channel 115 that branches from combustion air channel 110 upstream channel resistance part 117, and conducts through cooler 114, and then joins combustion air channel 110 downstream channel resistance part 117, and first valve 116 disposed in the
cooling channel. Hydrogen generating apparatus 101 further includes controller 113 for controlling the opening of first valve 116 to be increased during a stopping process.

According to such a configuration, it is possible to feed a predetermined amount of cooling air to hydro-desulfurizer 103 and combustor 107 at the time of stopping, so that it is possible to shorten the stopping time of hydrogen generating apparatus 101.

### (Ninth exemplary embodiment)

Next, hydrogen generating apparatus 101 of the ninth exemplary embodiment of the present invention will be described.

Hydrogen generating apparatus 101 of the ninth exemplary embodiment is configured similarly to hydrogen generating apparatus 101 of the eighth exemplary embodiment. Controller 113 is configured to control an opening of first valve 116 to be increased after stopping feed of the combustion gas to combustor 107 during the stopping process.

According to such a configuration, it is possible to feed a predetermined amount of cooling air to hydro-desulfurizer 103 and combustor 107 at the time of stopping, so that it is possible to shorten the stopping time of hydrogen generating apparatus 101.

An apparatus configuration of hydrogen generating apparatus 101 according to the ninth exemplary embodiment of the present invention can be similar to that of the eighth exemplary embodiment except for the content of the control by controller 113, namely the method for operating hydrogen generating apparatus 101. Accordingly, a constituent common to that in FIG. 10 is denoted by the same reference mark and name, and detailed description thereof is omitted. Also in the ninth exemplary embodiment, modification similar to that of the eighth exemplary embodiment can be made.

### [Operating method]

FIG. 12 is a flow chart showing one example of a method for operating hydrogen generating apparatus 101 according to the ninth exemplary embodiment of the present invention.

Hereinafter, referring to FIG. 12, a method for operating hydrogen generating apparatus 101 according to the ninth exemplary embodiment will be described. The operating method shown in FIG. 12 can be executed, for example, by controlling each part of hydrogen generating apparatus 101 by controller 113 according to the program stored in controller 113.

As the stopping process of hydrogen generating apparatus 101 is started (S1201), feed of a combustion gas to combustor 107 is stopped (S1202), and then the opening of first valve 116 is increased (S1203).

As the feed of a combustion gas to combustor 107 is stopped after shifting to the stopping process, combustion in combustor 107 is stopped, and the flow shifts to a cooling step of hydrogen generating apparatus 101. That is, the manipulated variable of air feeder 109 is increased, and a predetermined large amount of air is fed to hydrogen generating apparatus 101. By increasing the opening of first valve 116 after feed of a combustion gas to combustor 107 is stopped, it is possible to feed a predetermined amount of cooling air to hydro-desulfurizer 103 and combustor 107 as described above. Therefore, a predetermined amount of cooling air can be fed to hydro-desulfurizer 103 and combustor 107 from start of the cooling step, and hence the stopping time of hydrogen generating apparatus 101 can be shortened.

### (Tenth exemplary embodiment)

Next, the tenth exemplary embodiment of the present invention will be described.

Hydrogen generating apparatus 101 of the tenth exemplary embodiment is hydrogen generating apparatus 101 of the ninth exemplary embodiment, and controller 113 is configured to control an opening of first valve 116 to be increased after stopping feed of the combustion gas to combustor 107, and after stopping feed of water for use in reforming a feed stock.

According to such a configuration, it is possible to stop hydrogen generating apparatus 101 stably, and to feed a predetermined amount of cooling air to hydro-desulfurizer 103 and combustor 107 at the time of stopping, so that it is possible to shorten the stopping time of hydrogen generating apparatus 101.

An apparatus configuration of hydrogen generating apparatus 101 according to the tenth exemplary embodiment can be similar to that of the eighth exemplary embodiment except for the content of the control by controller 113, namely the method for operating hydrogen generating apparatus 101. Accordingly, a constituent common to that in FIG. 10 is denoted by the same reference mark and name, and detailed description thereof is omitted.

### [Operating method]

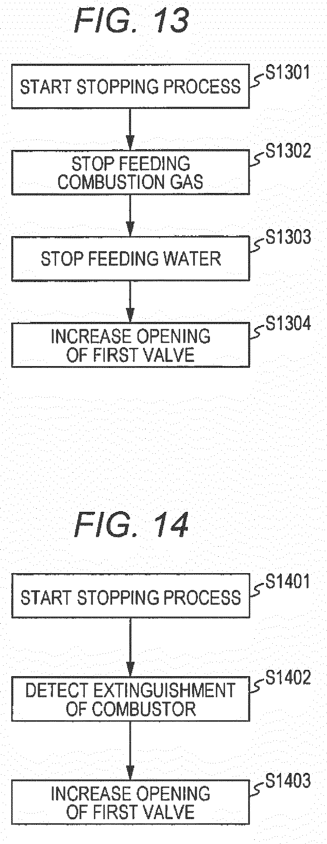

FIG. 13 is a flow chart showing one example of a method for operating hydrogen generating apparatus 101 according to the tenth exemplary embodiment of the present invention.

Hereinafter, referring to FIG. 13, a method for operating hydrogen generating apparatus 101 according to the tenth exemplary embodiment will be described. The operating method shown in FIG. 13 can be executed, for example, by controlling each part of hydrogen generating apparatus 101 by controller 113 according to the program stored in controller 113.

As the stopping process of hydrogen generating apparatus 101 is started (S1301), feed of the combustion gas to combustor 107 is stopped (S1302), then feed of the water for use in reforming the feed stock is stopped (S1303), and then the opening of first valve 116 is increased (S1304).

After shifting to the stopping process, when feed of the combustion gas to combustor 107 is stopped, the feed stock fed to reformer 106 is stopped. That is, as the feed stock is stopped, the combustion gas fed to combustor 107 via reformer 106 is stopped.

Here, if feed of water for use in reforming a feed stock is stopped before the feed stock is stopped, a period in which only the feed stock is fed to reformer 106 arises. If only the feed stock is fed to reformer 106 at high temperature, the feed stock is carbonized in reformer 106, and the performance of reformer 106 is deteriorated. Therefore, by stopping feed of water after stopping feed of the feed stock, it is possible to stop hydrogen generating apparatus 101 safely.

As the feed of water is stopped, hydrogen generating apparatus 101 shifts to the cooling step. That is, the manipulated variable of air feeder 109 is increased, and a predetermined large amount of air is fed to hydrogen generating apparatus 101. By increasing the opening of first valve 116 after feed of a combustion gas to combustor 107 is stopped, it is possible to feed a predetermined amount of cooling air to hydro-desulfurizer 103 and combustor 107 as described above. Therefore, a predetermined amount of cooling air can be fed to hydro-desulfurizer 103 and combustor 107 from start of the cooling step, and hence the stopping time of hydrogen generating apparatus 101 can be shortened.

### (Eleventh exemplary embodiment)

Next, the eleventh exemplary embodiment of the present invention will be described.

Hydrogen generating apparatus 101 of the eleventh exemplary embodiment is hydrogen generating apparatus 101 of the ninth exemplary embodiment or the tenth exemplary embodiment, and controller 113 is configured to control an opening of first valve 116 to be increased after extinguishment of combustor 107 is detected.

According to such a configuration, it is possible to feed a predetermined amount of cooling air to hydro-desulfurizer 103 and combustor 107 at the time of stopping, so that it is possible to shorten the stopping time of hydrogen generating apparatus 101.

An apparatus configuration of hydrogen generating apparatus 101 according to the eleventh exemplary embodiment can be similar to that of the eighth exemplary embodiment except for the content of the control by controller 113, namely the method for operating hydrogen generating apparatus 101. Accordingly, a constituent common to that in FIG. 10 is denoted by the same reference mark and name, and detailed description thereof is omitted.

### [Operating method]

FIG. 14 is a flow chart showing one example of a method for operating hydrogen generating apparatus 101 according to the eleventh exemplary embodiment of the present invention.

Hereinafter, referring to FIG. 14, a method for operating hydrogen generating apparatus 101 according to the tenth exemplary embodiment of the present invention will be described. The operating method shown in FIG. 14 can be executed, for example, by controlling each part of hydrogen generating apparatus 101 by controller 113 according to the program stored in controller 113.

As the stopping process of hydrogen generating apparatus 101 is started (S1401), extinguishment of combustor 107 is detected (S1402), and then the opening of first valve 116 is increased (S1403). After shifting to the stopping process, upon detection of extinguishment of combustor 107, the flow shifts to a cooling step of hydrogen generating apparatus 101. That is, the manipulated variable of air feeder 109 is increased, and a predetermined large amount of air is fed to hydrogen generating apparatus 101. By increasing the opening of first valve 116 after feed of a combustion gas to combustor 107 is stopped, it is possible to feed a predetermined amount of cooling air to hydro-desulfurizer 103 and combustor 107 as described above. Therefore, a predetermined amount of cooling air can be fed to hydro-desulfurizer 103 and combustor 107 from start of the cooling step, and hence the stopping time of hydrogen generating apparatus 101 can be shortened. While a flame rod that detects a flame is used as the method for detecting extinguishment of combustor 107 in the present exemplary embodiment, a thermocouple or the like for detecting the temperature of combustor 107 may also be used.

### (Twelfth exemplary embodiment)

Next, the twelfth exemplary embodiment of the present invention will be described.

Fuel cell system 121 of the twelfth exemplary embodiment includes hydrogen generating apparatus 101 as described in any one of the eighth exemplary embodiment to the eleventh exemplary embodiment, and fuel cell 120 that generates power by using a hydrogen-containing gas fed from hydrogen generating apparatus 101.

With such a configuration, it is possible to feed a predetermined amount of cooling air to hydro-desulfurizer 103 and combustor 107 at the time of stopping, so that it is possible to shorten the stopping time of fuel cell system 121.

### [Apparatus configuration]

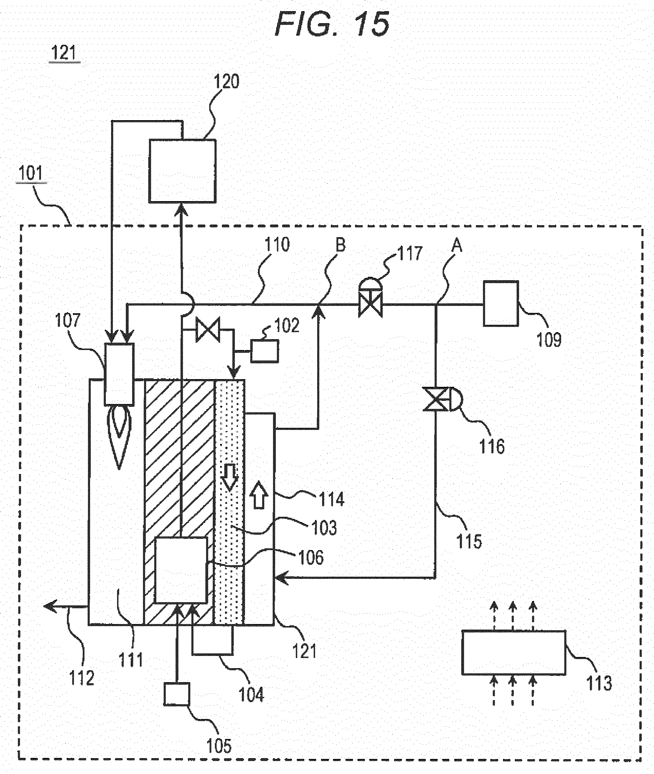

FIG. 15 is a schematic view showing one example of a general configuration of fuel cell system 121 according to the twelfth exemplary embodiment of the present invention.

In fuel cell system 121 of the twelfth exemplary embodiment of the present invention, a configuration of hydrogen generating apparatus 101 can be similar to that of hydrogen generating apparatus 101 of the eighth exemplary embodiment and modified examples thereof. Accordingly, a constituent common between FIG. 15 and FIG. 10 is denoted by the same reference mark and name, and description thereof is omitted.

Fuel cell 120 is a fuel cell that generates power by using a hydrogen-containing gas fed from hydrogen generating apparatus 101. Fuel cell 120 may be any kind of fuel cell, and for example, a polyelectrolyte fuel cell (PEFC), a solid oxide fuel cell, or a phosphate fuel cell can be used.

### [Operating method]

Operation of fuel cell system 121 in the present exemplary embodiment can be similar to that of hydrogen generating apparatus 101 according to at least one of the eighth exemplary embodiment to the eleventh exemplary embodiment, and modified examples thereof. Therefore, detailed description thereof is omitted. With such a configuration, it is possible to feed a predetermined amount of cooling air to hydro-desulfurizer 103 and combustor 107 at the time of stopping, so that it is possible to shorten the stopping time of fuel cell system 121.

From the above description, various improvements and other exemplary embodiments of the present invention are apparent to a person skilled in the art. Therefore, the above description should be interpreted merely as illustration, and is provided for the purpose of teaching a person skilled in the art the best mode for carrying out the present invention. Details of at least either of the structure and the function can be substantially changed without departing from the spirit of the present invention.

As described above, hydrogen generating apparatus 101 of the exemplary embodiment includes reformer 106 for reforming a feed stock containing hydrocarbon to generate a hydrogen-containing gas, combustor 107 for heating reformer 106 by combusting a combustion gas which is a feed stock or a hydrogen-containing gas and air, and air feeder 109 for feeding air to combustor 107. Hydrogen generating apparatus 101 also includes combustion air channel 110 for connecting combustor 107 and air feeder 109, hydro-desulfurizer 103 for removing a sulfur component in a feed stock by hydrogenation reaction, and cooler 114 for cooling hydro-desulfurizer 103 by circulating air. Hydrogen generating apparatus 101 also includes channel resistance part 117 disposed in combustion air channel 110, cooling channel 115 that branches from combustion air channel 110 upstream channel resistance part 117, and conducts through cooler 114, and then joins combustion air channel 110 downstream channel resistance part 117, first valve 116 disposed in the cooling channel, and controller 113 for controlling an opening of first valve 116 to be increased at a predetermined timing, for example, during a stopping process.

According to such a configuration, it is possible to feed a predetermined amount of cooling air to hydro-desulfurizer 103 and combustor 107 at the time of stopping, so that it is possible to shorten the stopping time of hydrogen generating apparatus 101.

Controller 113 of hydrogen generating apparatus 101 may be configured to control the opening of first valve 116 to be increased after stopping feed of the combustion gas to combustor 107 during the stopping process.

According to such a configuration, it is possible to feed a predetermined amount of cooling air to hydro-desulfurizer 103 and combustor 107 at the time of stopping, so that it is possible to shorten the stopping time of hydrogen generating apparatus 101.

Controller 113 of hydrogen generating apparatus 101 may be configured to control the opening of first valve 116 to be increased after stopping feed of the combustion gas to combustor 107, and after stopping feed of water for use in reforming a feed stock.

With such a configuration, it becomes possible to shorten the stopping time. It is also possible to stop hydrogen generating apparatus 101 stably, and to feed a predetermined amount of cooling air to hydro-desulfurizer 103 and combustor 107 at the time of stopping, so that it is possible to shorten the stopping time of hydrogen generating apparatus 101.

Controller 113 may be configured to control the opening of first valve 116 to be increased after extinguishment of combustor 107 is detected.

According to such a configuration, it is possible to feed a predetermined amount of cooling air to hydro-desulfurizer 103 and combustor 107 at the time of stopping, so that it is possible to shorten the stopping time of hydrogen generating apparatus 101.

Fuel cell system 121 of the exemplary embodiment includes hydrogen generating apparatus 101, and fuel cell 120 that generates power by using a hydrogen-containing gas fed from hydrogen generating apparatus 101.

With such a configuration, it is possible to feed a predetermined amount of cooling air to hydro-desulfurizer 103 and combustor 107 at the time of stopping, so that it is possible to shorten the stopping time of fuel cell system 121.

In addition, hydrogen generating apparatus 101 of the exemplary embodiment includes reformer 106 for reforming a feed stock containing hydrocarbon to generate a hydrogen-containing gas, combustor 107 for heating reformer 106 by combusting a combustion gas which is a feed stock or a hydrogen-containing gas and air, and air feeder 109 for feeding air to combustor 107. Hydrogen generating apparatus 101 also includes combustion air channel 110 for connecting combustor 107 and air feeder 109, hydro-desulfurizer 103 for removing a sulfur component in a feed stock by hydrogenation reaction, and cooler 114 for cooling hydro-desulfurizer 103 by circulating air. Further, hydrogen generating apparatus 101 includes channel resistance part 117 disposed in combustion air channel 110, and cooling channel 115 that branches from combustion air channel 110 upstream channel resistance part 117, and conducts through cooler 114, and then joins combustion air channel 110 downstream channel resistance part 117. Hydrogen generating apparatus 101 also includes first valve 116 disposed in the cooling channel. It is described to provide the operating method of such hydrogen generating apparatus 101 with the step of increasing the opening of first valve 116 during the stopping process. This method can shorten the stopping time.

The method may also increase the opening of first valve 116 after stopping feed of the combustion gas to combustor 107 during the stopping process.

According to this method, it is possible to feed a predetermined amount of cooling air to hydro-desulfurizer 103 and combustor 107 at the time of stopping, so that it is possible to shorten the stopping time of hydrogen generating apparatus 101.

The method may also increase the opening of first valve 116 after stopping feed of the combustion gas to combustor 107, and after stopping feed of water for use in reforming a feed stock.

According to this method, it is possible to stop hydrogen generating apparatus 101 stably, and to feed a predetermined amount of cooling air to hydro-desulfurizer 103 and combustor 107 at the time of stopping, so that it is possible to shorten the stopping time of hydrogen generating apparatus 101.

The method may also increase the opening of first valve 116 after extinguishment of combustor 107 is detected.

According to such a method, it is possible to feed a predetermined amount of cooling air to hydro-desulfurizer 103 and combustor 107 at the time of stopping, so that it is possible to shorten the stopping time of hydrogen generating apparatus 101.

### INDUSTRIAL APPLICABILITY

As described above, according to the present invention, an exceptional effect of an ability to check unstable combustion in the combustor can be exerted. Therefore, the present invention is useful as a hydrogen generating apparatus that generates hydrogen by reacting a hydrocarbonic feed stock with water, more specifically a hydrogen generating apparatus equipped with a hydro-desulfurizer for removing a sulfur compound which is contained in a feed stock and harmful to the hydrogen generating apparatus, by hydrogenation reaction, and a method for operating the same.

### REFERENCE MARKS IN THE DRAWINGS

- 1, 101: hydrogen generating apparatus
- 2, 102: feed stock flow controller
- 3, 103: hydro-desulfurizer
- 4, 104: piping
- 5, 105: water feeder
- 6, 106: reformer
- 7, 107: combustor
- 8, 120: fuel cell
- 9, 109: air feeder
- 10, 110: combustion air channel
- 11, 111: heat exchange channel
- 12, 112: combustion exhaust gas route
- 13, 113: controller
- 14, 114: cooler
- 15, 115: cooling channel
- 16, 116: first valve
- 17, 117: channel resistance part
- 19: first temperature detector
- 108: hydrogen utilizing device
- 121: fuel cell system

## Claims

1. A hydrogen generating apparatus comprising:
a reformer (6) for reforming a feed stock containing hydrocarbon to generate a hydrogen-containing gas;
a combustor (7) for heating the reformer (6) by combusting a combustion gas which is the feed stock or the hydrogen-containing gas and air;
an air feeder (9) for feeding the air to the combustor (7);
a combustion air channel (10) for connecting the combustor (7) and the air feeder (9);
a hydro-desulfurizer (3) for removing a sulfur component in the feed stock by hydrogenation reaction;
a cooler (14) for cooling the hydro-desulfurizer (3) by circulating the air;
**characterized by**
a channel resistance part (17) disposed in the combustion air channel (10);
a cooling channel (15) that branches from the combustion air channel (10) upstream the channel resistance part (17), and conducts through the cooler (14), and then joins the combustion air channel (10) downstream the channel resistance part (17);
a first valve (16) disposed in the cooling channel (15); and
a controller (13) configured to control an opening of the first valve (16) to be increased at a predetermined timing.

2. The hydrogen generating apparatus according to claim 1, wherein the controller (13) is configured to control the opening of the first valve (16) to be increased in conducting an ignition operation of the combustor (7).

3. The hydrogen generating apparatus according to claim 1, wherein the controller (13) is configured to control the opening of the first valve (16) to be increased in feeding reforming water to the reformer (6) during startup.

4. The hydrogen generating apparatus according to claim 2, wherein the controller (13) is configured to control the opening of the first valve (16) to be decreased after a lapse of a first setting time from start or end of the ignition operation.

5. The hydrogen generating apparatus according to claim 3, wherein the controller (13) is configured to control the opening of the first valve (16) to be decreased after a lapse of a second setting time from start of feeding the reforming water.

6. The hydrogen generating apparatus according to claim 2 or claim 3, further comprising;
a first temperature detector (19) for detecting a temperature of the reformer (6), wherein the controller (13) is configured to control the opening of the first valve (16) to be decreased when the temperature detected by the first temperature detector (19) reaches a first threshold or higher during startup.

7. The hydrogen generating apparatus according to any one of claim 4 to claim 6, wherein the controller (13) is configured to control a feed amount of air from the air feeder (9) to be increased before decreasing the opening of the first valve (16).

8. The hydrogen generating apparatus according to claim 7, wherein the controller (13) is configured to control the feed amount of air from the air feeder (9) to be reduced and the opening of the first valve (16) to be decreased.

9. The hydrogen generating apparatus according to any one of claim 1 to claim 8, wherein the controller (13) is configured to control the opening of the first valve (16) to be increased at the time of connection when feed of a hydrogen-containing gas of the hydrogen generating apparatus to a hydrogen utilizing device starts after completion of startup.

10. The hydrogen generating apparatus according to claim 1, wherein the controller (13) is configured to control the opening of the first valve (16) to be increased during a stopping process of the hydrogen generating apparatus.

11. The hydrogen generating apparatus according to claim 10, wherein the controller (13) is configured to control the opening of the first valve (16) to be increased after stopping feed of the combustion gas to the combustor during the stopping process of the hydrogen generating apparatus.

12. The hydrogen generating apparatus according to claim 11, wherein the controller (13) is configured to control the opening of the first valve (16) to be increased after stopping feed of the combustion gas to the combustor (7) and after stopping feed of water for use in reforming the feed stock.

13. The hydrogen generating apparatus according to claim 11 or claim 12, wherein the controller (13) is configured to control the opening of the first valve (16) to be increased after extinguishment of the combustor (7) is detected.

14. A method for operating a hydrogen generating apparatus including:
a reformer (6) for reforming a feed stock containing hydrocarbon to generate a hydrogen-containing gas;
a combustor (7) for heating the reformer (6) by combusting a combustion gas which is the feed stock or the hydrogen-containing gas and air;
an air feeder (9) for feeding the air to the combustor (7);
a combustion air channel (10) for connecting the combustor (7) and the air feeder (9);
a hydro-desulfurizer (3) for removing a sulfur component in the feed stock by hydrogenation reaction;
a cooler (14) for cooling the hydro-desulfurizer (3) by circulating the air;
**characterized by**
a channel resistance part (17) disposed in the combustion air channel (10);
a cooling channel (15) that branches from the combustion air channel (10) upstream the channel resistance part (17), and conducts through the cooler (14), and then joins the combustion air channel (10) downstream the channel resistance part (17); and
a first valve (16) disposed in the cooling channel (15),
the method comprising the step of increasing an opening of the first valve (16) at a predetermined timing.

## Patentansprüche

1. Wasserstofferzeugungs-Vorrichtung, die umfasst:
einen Reformer (6), mit dem ein Rohstoff, der Kohlenwasserstoff enthält, reformiert wird, um ein wasserstoffhaltiges Gas zu erzeugen;
einen Brenner (7), mit dem der Reformer (6) erhitzt wird, indem ein Brenngas, das der Rohstoff oder das wasserstoffhaltige Gas ist, und Luft verbrannt werden;
eine Luft-Zuführeinrichtung (9) zum Zuführen der Luft zu dem Brenner (7);
einen Verbrennungsluft-Kanal (10) zum Verbinden des Brenners (7) und der Luft-Zuführeinrichtung (9);
eine Hydro-Entschwefelungseinrichtung (3) zum Entfernen einer Schwefelkomponente in dem Rohstoff mittels einer Wasserstofferzeugungs-Reaktion;
eine Kühleinrichtung (14), mit der die Hydro-Entschwefelungseinrichtung (3) durch Zirkulieren der Luft gekühlt wird;
**gekennzeichnet durch**
einen Kanaldrosselungs-Teil (17), der in dem Verbrennungsluft-Kanal (10) angeordnet ist;
einen Kühl-Kanal (15), der von dem Verbrennungsluft-Kanal (10) stromauf von dem Kanaldrosselungs-Teil (17) abzweigt, durch die Kühleinrichtung (14) führt und dann stromab von dem Kanaldrosselungs-Teil (17) in den Verbrennungsluft-Kanal (10) übergeht;
ein erstes Ventil (16), das in dem Kühl-Kanal (15) angeordnet ist ; sowie
eine Steuerungseinrichtung (13), die so eingerichtet ist, dass sie eine Öffnung des ersten Ventils (16) so steuert, dass sie zu einem vorgegebenen Zeitpunkt vergrößert wird.

2. Wasserstofferzeugungs-Vorrichtung nach Anspruch 1, wobei die Steuerungseinrichtung (13) so eingerichtet ist, dass sie die Öffnung des ersten Ventils (16) so steuert, dass sie beim Durchführen eines Zünd-Vorgangs des Brenners (7) vergrößert wird.

3. Wasserstofferzeugungs-Vorrichtung nach Anspruch 1, wobei die Steuerungseinrichtung (13) so eingerichtet ist, dass sie die Öffnung des ersten Ventils (16) so steuert, dass sie beim Zuführen von Reformier-Wasser zu dem Reformer (6) beim Starten vergrößert wird.

4. Wasserstofferzeugungs-Vorrichtung nach Anspruch 2, wobei die Steuerungseinrichtung (13) so eingerichtet ist, dass sie die Öffnung des ersten Ventils (16) so steuert, dass sie nach Verstreichen einer ersten Stabilisierungszeit nach Beginn oder Ende des Zünd-Vorgangs verkleinert wird.

5. Wasserstofferzeugungs-Vorrichtung nach Anspruch 3, wobei die Steuerungseinrichtung (13) so eingerichtet ist, dass sie die Öffnung des ersten Ventils (16) so steuert, dass sie nach Verstreichen einer ersten Stabilisierungszeit nach Beginn von Zufuhr von Reformier-Wasser verkleinert wird.

6. Wasserstofferzeugungs-Vorrichtung nach Anspruch 2 oder Anspruch 3, die des Weiteren umfasst:
einen ersten Temperatur-Detektor (19) zum Erfassen einer Temperatur des Reformers (6), wobei die Steuerungseinrichtung (13) so eingerichtet ist, dass sie die Öffnung des ersten Ventils (16) so steuert, dass sie verkleinert wird, wenn die durch den ersten Temperatur-Detektor (19) erfasste Temperatur beim Starten einen ersten Schwellenwert erreicht oder überschreitet.

7. Wasserstofferzeugungs-Vorrichtung nach einem der Ansprüche 4 bis 6, wobei die Steuerungseinrichtung (13) so eingerichtet ist, dass sie eine Luft-Zuführmenge von der Luft-Zuführeinrichtung (9) so steuert, dass sie vergrößert wird, bevor die Öffnung des ersten Ventils (16) verkleinert wird.

8. Wasserstofferzeugungs-Vorrichtung nach Anspruch 7, wobei die Steuerungseinrichtung (13) so eingerichtet ist, dass sie die Luft-Zuführmenge von der Luft-Zuführeinrichtung (9) so steuert, dass sie reduziert wird und die Öffnung des ersten Ventils (16) verkleinert wird.

9. Wasserstofferzeugungs-Vorrichtung nach einem der Ansprüche 1 bis 8, wobei die Steuerungseinrichtung (13) so eingerichtet ist, dass sie die Öffnung des ersten Ventils (16) so steuert, dass sie zum Zeitpunkt von Verbindung vergrößert wird, wenn Zufuhr eines wasserstoffhaltigen Gases der Wasserstofferzeugungs-Vorrichtung zu einer Wasserstoff nutzenden Vorrichtung nach Abschluss des Startens beginnt.

10. Wasserstofferzeugungs-Vorrichtung nach Anspruch 1, wobei die Steuerungseinrichtung (13) so eingerichtet ist, dass sie die Öffnung des ersten Ventils (16) so steuert, dass sie während eines Prozesses zum Anhalten der Wasserstofferzeugungs-Vorrichtung vergrößert wird.

11. Wasserstofferzeugungs-Vorrichtung nach Anspruch 10, wobei die Steuerungseinrichtung (13) so eingerichtet ist, dass sie die Öffnung des ersten Ventils (16) so steuert, dass sie nach Unterbrechen von Zufuhr des Brenngases zu dem Brenner während des Prozesses zum Anhalten der Wasserstofferzeugungs-Vorrichtung vergrößert wird.

12. Wasserstofferzeugungs-Vorrichtung nach Anspruch 11, wobei die Steuerungseinrichtung (13) so eingerichtet ist, dass sie die Öffnung des ersten Ventils (16) so steuert, dass sie nach Unterbrechen von Zufuhr des Brenngases zu dem Brenner (7) und nach Unterbrechen von Zufuhr von Wasser zum Einsatz beim Reformieren des Rohstoffs vergrößert wird.

13. Wasserstofferzeugungs-Vorrichtung nach Anspruch 11 oder Anspruch 12, wobei die Steuerungseinrichtung (13) so eingerichtet ist, dass sie die Öffnung des ersten Ventils (16) so steuert, dass sie nach Erfassen von Erlöschen des Brenners (7) vergrößert wird.

14. Verfahren zum Betreiben einer Wasserstofferzeugungs-Vorrichtung, die enthält:
einen Reformer (6), mit dem ein Rohstoff, der Kohlenwasserstoff enthält, reformiert wird, um ein wasserstoffhaltiges Gas zu erzeugen;
einen Brenner (7), mit dem der Reformer (6) erhitzt wird, indem ein Brenngas, das der Rohstoff oder das wasserstoffhaltige Gas ist, und Luft verbrannt werden;
eine Luft-Zuführeinrichtung (9) zum Zuführen der Luft zu dem Brenner (7);
einen Verbrennungsluft-Kanal (10) zum Verbinden des Brenners (7) und der Luft-Zuführeinrichtung (9);
eine Hydro-Entschwefelungseinrichtung (3) zum Entfernen einer Schwefelkomponente in dem Rohstoff mittels einer Wasserstofferzeugungs-Reaktion;
eine Kühleinrichtung (14), mit der die Hydro-Entschwefelungseinrichtung (3) durch Zirkulieren der Luft gekühlt wird;
**gekennzeichnet durch**
einen Kanaldrosselungs-Teil (17), der in dem Verbrennungsluft-Kanal (10) angeordnet ist;
einen Kühl-Kanal (15), der von dem Verbrennungsluft-Kanal (10) stromauf von dem Kanaldrosselungs-Teil (17) abzweigt, durch die Kühleinrichtung (14) führt und dann stromab von dem Kanaldrosselungs-Teil (17) in den Verbrennungsluft-Kanal (10) übergeht;
ein erstes Ventil (16), das in dem Kühl-Kanal (15) angeordnet ist,
wobei das Verfahren den Schritt umfasst, in dem eine Öffnung des ersten Ventils (16) zu einem vorgegebenen Zeitpunkt vergrößert wird.

## Revendications

1. Appareil de production d'hydrogène comprenant :
un module de reformage (6) destiné à reformer une charge d'alimentation contenant de l'hydrocarbure pour produire un gaz contenant de l'hydrogène ;
un module de combustion (7) destiné à chauffer le module de reformage (6) par combustion d'un gaz de combustion qui est la charge d'alimentation ou le gaz contenant de l'hydrogène et de l'air ;
un dispositif de fourniture d'air (9) destiné à fournir de l'air au module de combustion (7) ;
un canal d'air de combustion (10) destiné à relier le module de combustion (7) et le dispositif de fourniture d'air (9) ;
un module d'hydrodésulfuration (3) destiné à éliminer un composant soufré de la charge d'alimentation par une réaction d'hydrogénation ;
un refroidisseur (14) destiné à refroidir le module d'hydrodésulfuration (3) par circulation de l'air ;
**caractérisé par**
une pièce de résistance de canal (17) disposée dans le canal d'air de combustion (10) ;
un canal de refroidissement (15) qui est dérivé du canal d'air de combustion (10) en amont de la pièce de résistance de canal (17), et forme un conduit à travers le refroidisseur (14), puis rejoint le canal d'air de combustion (10) en aval de la pièce de résistance de canal (17) ;
une première vanne (16) disposée dans le canal de refroidissement (15) ; et
un module de commande (13) configuré pour commander une augmentation d'une ouverture de la première vanne (16) à un instant prédéfini.

2. Appareil de production d'hydrogène selon la revendication 1, dans lequel le module de commande (13) est configuré pour commander une augmentation de l'ouverture de la première vanne (16) lors de la réalisation d'une opération d'allumage du module de combustion (7).

3. Appareil de production d'hydrogène selon la revendication 1, dans lequel le module de commande (13) est configuré pour commander une augmentation de l'ouverture de la première vanne (16) lors de la fourniture d'eau de reformage au module de reformage (6) pendant le démarrage.

4. Appareil de production d'hydrogène selon la revendication 2, dans lequel le module de commande (13) est configuré pour commander une diminution de l'ouverture de la première vanne (16) après l'écoulement d'un premier temps de réglage à partir du début ou de la fin de l'opération d'allumage.

5. Appareil de production d'hydrogène selon la revendication 3, dans lequel le module de commande (13) est configuré pour commander une diminution de l'ouverture de la première vanne (16) après l'écoulement d'un second temps de réglage à partir du début de la fourniture d'eau de reformage.

6. Appareil de production d'hydrogène selon la revendication 2 ou la revendication 3, comprenant en outre :
un premier détecteur de température (19) destiné à détecter une température du module de reformage (6), le module de commande (13) étant configuré pour commander une diminution de l'ouverture de la première vanne (16) lorsque la température détectée par le premier détecteur de température (19) atteint ou dépasse un premier seuil pendant le démarrage.

7. Appareil de production d'hydrogène selon l'une quelconque de la revendication 4 à la revendication 6, dans lequel le module de commande (13) est configuré pour commander une augmentation d'une quantité de fourniture d'air par le dispositif de fourniture d'air (9) avant la diminution de l'ouverture de la première vanne (16).

8. Appareil de production d'hydrogène selon la revendication 7, dans lequel le module de commande (13) est configuré pour commander une réduction de la quantité de fourniture d'air par le dispositif de fourniture d'air (9) et une diminution de l'ouverture de la première vanne (16).

9. Appareil de production d'hydrogène selon l'une quelconque de la revendication 1 à la revendication 8, dans lequel le module de commande (13) est configuré pour commander une augmentation de l'ouverture de la première vanne (16) au moment de la connexion lorsque la fourniture d'un gaz contenant de l'hydrogène de l'appareil de génération d'hydrogène à un dispositif utilisateur d'hydrogène débute après la fin du démarrage.

10. Appareil de production d'hydrogène selon la revendication 1, dans lequel le module de commande (13) est configuré pour commander une augmentation de l'ouverture de la première vanne (16) pendant un processus d'arrêt de l'appareil de production d'hydrogène.

11. Appareil de production d'hydrogène selon la revendication 10, dans lequel le module de commande (13) est configuré pour commander une augmentation de l'ouverture de la première vanne (16) après l'arrêt de la fourniture du gaz de combustion au module de combustion pendant le processus d'arrêt de l'appareil de production d'hydrogène.

12. Appareil de production d'hydrogène selon la revendication 11, dans lequel le module de commande (13) est configuré pour commander une augmentation de l'ouverture de la première vanne (16) après l'arrêt de la fourniture du gaz de combustion au module de combustion (7) et après l'arrêt de la fourniture d'eau destinée à être utilisée pour le reformage de la charge d'alimentation.

13. Appareil de production d'hydrogène selon la revendication 11 ou la revendication 12, dans lequel le module de commande (13) est configuré pour commander une augmentation de l'ouverture de la première vanne (16) après que l'extinction du module de combustion (7) a été détectée.

14. Procédé d'exploitation d'un appareil de production d'hydrogène incluant :
un module de reformage (6) destiné à reformer une charge d'alimentation contenant de l'hydrocarbure pour produire un gaz contenant de l'hydrogène ;
un module de combustion (7) destiné à chauffer le module de reformage (6) par combustion d'un gaz de combustion qui est la charge d'alimentation ou le gaz contenant de l'hydrogène et de l'air ;
un dispositif de fourniture d'air (9) destiné à fournir de l'air au module de combustion (7) ;
un canal d'air de combustion (10) destiné à relier le module de combustion (7) et le dispositif de fourniture d'air (9) ;
un module d'hydrodésulfuration (3) destiné à éliminer un composant soufré de la charge d'alimentation par une réaction d'hydrogénation ;
un refroidisseur (14) destiné à refroidir le module d'hydrodésulfuration (3) par circulation de l'air ;
**caractérisé par**
une pièce de résistance de canal (17) disposée dans le canal d'air de combustion (10) ;
un canal de refroidissement (15) qui est dérivé du canal d'air de combustion (10) en amont de la pièce de résistance de canal (17), et forme un conduit à travers le refroidisseur (14), puis rejoint le canal d'air de combustion (10) en aval de la pièce de résistance de canal (17) ;
une première vanne (16) disposée dans le canal de refroidissement (15),
le procédé comprenant l'étape d'augmentation d'une ouverture de la première vanne (16) à un instant prédéfini.
